Europäisches Patentamt

European Patent Office

Office européen des brevets

(19)

(11) Veröffentlichungsnummer: **0 268 742**
**B1**

(12) **EUROPÄISCHE PATENTSCHRIFT**

(45) Veröffentlichungstag der Patentschrift:
**10.01.90**

(51) Int. Cl.⁴: **G01L 19/14**, G01L 19/04,
G01L 19/06

(21) Anmeldenummer: **87110592.0**

(22) Anmeldetag: **22.07.87**

(54) Gehäuseeinrichtung mit Druckausgleich.

(30) Priorität: **16.10.86 DE 3635165**

(43) Veröffentlichungstag der Anmeldung:
**01.06.88 Patentblatt 88/22**

(45) Bekanntmachung des Hinweises auf die Patenterteilung:
**10.01.90 Patentblatt 90/2**

(84) Benannte Vertragsstaaten:
**DE FR GB NL SE**

(56) Entgegenhaltungen:
**DE-U- 1 994 864**
**US-A- 4 513 623**

(73) Patentinhaber: **WABCO Westinghouse**
**Fahrzeugbremsen GmbH, Am Lindener**
**Hafen 21 Postfach 91 12 80, D-3000 Hannover 91(DE)**

(72) Erfinder: **Heinrich, Horst, Ing. (grad.), Basaltweg 2,**
**D-3000 Hannover 91(DE)**
Erfinder: **Lustfeld, Eike, Dipl.-Ing., Clausthaler Weg 29,**
**D-3000 Hannover 21(DE)**
Erfinder: **Rovira, Juan, Bürgermeister-Fink-Strasse 5,**
**D-3000 Hannover 1(DE)**

(74) Vertreter: **Schrödter, Manfred, WABCO Westinghouse**
**Fahrzeugbremsen GmbH Am Lindener**
**Hafen 21 Postfach 91 12 80, D-3000 Hannover 91(DE)**

## Beschreibung

Die Erfindung betrifft eine Gehäuseeinrichtung mit Druckausgleich, insbesondere für einen Drucksensor, gemäß dem Oberbegriff des Patentanspruchs 1.

Eine derartige Gehäuseeinrichtung setzt sich aus einem wenigstens ein elektrisch leitendes Kontaktelement aufweisenden ersten Gehäuse und einem wenigstens ein elektrisch leitendes Gegenkontaktelement aufweisenden zweiten Gehäuse zusammen. Das erste Gehäuse dient zur Aufnahme eines mit dem Kontaktelement verbundenen elektrischen Bauteiles und das zweite Gehäuse ist zur Aufnahme wenigstens eines mit dem Gegenkontaktelement verbundenen Teiles eines elektrisch leitenden Verbindungselementes vorgesehen. Das Kontaktelement und das Gegenkontaktelement sind nach Art einer Steckverbindung miteinander verbindbar. Das Kontaktelement und das Gegenkontaktelement sind nach dem Herstellen der Steckverbindung innerhalb eines von den beiden Gehäusen gebildeten und von einem Dichtelement abgedichteten Raumes gelegen.

An das erste Gehäuse, welches zur Aufnahme von elektrischen Bauteilen dient, wird die Anforderung gestellt, ein Höchstmaß an Sicherheit gegen das Eindringen von Feuchtigkeit und Schmutz zu bieten, um z. B. durch Korrosion und Schmutzablagerungen bedingte Funktionsstörungen der elektrischen Bauteile zu vermeiden. Diese Anforderung ist durch druckdichtes Verschließen, wie z. B. durch Vergießen von Leitungsdurchführungen und die Anordnung eines nicht lösbaren Gehäuseverschlusses leicht zu erfüllen, solange es sich bei den vom ersten Gehäuse aufzunehmenden Bauteilen nicht um solche handelt, die aufgrund von durch Temperaturschwankungen bedingten, im druckdicht abgeschlossenen Gehäuse auftretenden Druckänderungen (z. B. erheblich ansteigender Druck) zu Fehlfunktionen neigen, wie es z. B. bei der Meßzelle eines Drucksensors der Fall ist, oder solange es sich nicht um Bauteile handelt, die zwecks Wartungs- oder Reparaturarbeiten aus dem Gehäuse herausgenommen werden müssen.

Ist das Gehäuse zu diesem Zweck mit einem lösbaren Verschluß versehen, so muß zwischen dem Gehäuse und dem Verschluß eine Dichtung vorgesehen werden. Treten in einem mit lösbarem Verschluß und Dichtelement versehenen Gehäuse aufgrund von starken Temperaturschwankungen Druckänderungen auf, die bezogen auf die Druckverhältnisse außerhalb des Gehäuses vom Überdruckbereich bishin zum Unterdruckbereich reichen, so können an den abgedichteten Stellen des Gehäuses Spalte entstehen, durch welche z. B. beim Auftreten von Unterdruck im Gehäuse Feuchtigkeit in den Gehäuseinnenraum gelangen kann.

Ist in einem Gehäuse eine Meßzelle angeordnet, die auf sich verändernde Drücke ansprechen soll, wie es z. B. bei einem Drucksensor der Fall ist, so reichen alleine durch Temperaturänderungen verursachte geringe Druckschwankungen im Gehäuseinnenraum aus, um die Meßwerte zu verfälschen.

Um das Auftreten von Druckschwankungen im Gehäuse weitgehend zu vermeiden, ist es denkbar, am Gehäuse eine Öffnung vorzusehen, über welche der Gehäuseinnenraum mit der Atmosphäre verbindbar ist. Das Eindringen von Feuchtigkeit und Schmutz in den Gehäuseinnenraum kann durch die Anordnung eines zur Atmosphäre hin in die Offenstellung bringbaren Rückschlagventils verhindert werden. Die Anordnung eines die Öffnung in Richtung auf den Gehäuseinnenraum zu verschließenden Rückschlagventils hat verschiedene Nachteile.

Der Anstieg des Druckes im Gehäuseinnenraum auf einen Wert, der über dem außerhalb des Gehäuses herrschenden Druckes liegt, kann nicht verhindert werden, da zum Öffnen des Rückschlagventils ein über den erwähnten Druck hinausgehender Druck erforderlich ist. Es müssen die Schließkraft des Ventils und auch die Reibkräfte der Bauteile des Rückschlagventils überwunden werden. Zudem ist zur Herstellung eines mit einem Rückschlagventil versehenen Gehäuses ein erhöhter Bauteile- und Arbeitsaufwand erforderlich. Im übrigen kann bei sehr niedrigen Temperaturen im Gehäuseinnenraum Unterdruck entstehen, da das Rückschlagventil lediglich ein Absenken des Druckes im Gehäuseinnenraum zuläßt, jedoch ein Nachströmen eines gasförmigen Mediums verhindert.

Der Erfindung liegt die Aufgabe zugrunde, eine Gehäuseeinrichtung der eingangs genannten Art zu schaffen, die einfach im Aufbau ist und bei welcher das Eindringen von Schmutz und Feuchtigkeit weitgehend verhindert wird.

Diese Aufgabe wird mit der im Patentanspruch 1 angegebenen Erfindung gelöst. Weiterbildungen und vorteilhafte Ausgestaltungen der Erfindung sind in den Unteransprüchen angegeben.

Die Erfindung bietet insbesondere den Vorteil, eine Gehäuseeinrichtung mit Druckausgleich zu erhalten, bei welcher eine permanente Beatmung des Innenraumes des die elektrischen Bauteile beinhaltenden ersten Gehäuses ermöglicht wird. Da die Verbindung des Innenraumes des die elektrischen Bauteile beinhaltenden Gehäuses über den Innenraum eines zweiten Gehäuses zu einem gegen das Eindringen von Feuchtigkeit und Schmutz geschützten Ort erfolgt, ist es nicht mehr erforderlich, die Öffnung zur Beatmung des Gehäuseinnenraumes mittels eines Rückschlagventils abzudecken. Zum Schutz gegen das Eindringen von Feuchtigkeit und Schmutz in den die elektrischen Bauteile beinhaltenden Raum des ersten Gehäuses der Gehäuseeinrichtung werden die bereits vorhandenen Gehäuseteile des die Kontaktelemente aufweisenden ersten Gehäuses und die Gehäuseteile des die Gegenkontaktelemente aufweisenden zweiten Gehäuses benutzt. Gemäß einer in den Unteransprüchen angegebenen vorteilhaften Ausgestaltung der Erfindung wird bei einem einen mehrpoligen Stecker aufweisenden ersten Gehäuse ein nicht genutztes Kontaktelement, wie z. B. ein Polstift, entfernt und ein normalerweise als Lagerung für den Polstift dienender Durchbruch im Steckerteil als Öffnung zur Beatmung des Innenraumes des das elektrische Bauteil aufweisenden ersten Gehäuses benutzt.

Nach dem Herstellen der Steckverbindung zwischen de m Kontaktelement des ersten Gehäuses und dem Gegenkontaktelement des zweiten Gehäuses ist der Gehäuseinnenraum des ersten Gehäuses über die durch das Entfernen des Polstiftes geschaffene Öffnung des ersten Gehäuses und das freibleibende Gegenkontaktelement mit dem Gehäuseinnenraum des zweiten Gehäuses verbunden.

Als Verbindung des Gehäuseinnenraumes des zweiten Gehäuses und somit auch des Gehäuseinnenraumes des ersten Gehäuses mit der Atmosphäre dient gemäß einer in den Unteransprüchen angegebenen Ausgestaltung der Erfindung ein am zweiten Gehäuse abgedichtet angeordneter hülsenförmiger Körper, durch welchen die als elektrisch leitende Verbindungselemente dienenden Leitungen aus dem zweiten Gehäuse herausgeführt sind.

Gemäß einer in den Unteransprüchen angegebenen Weiterbildung der Erfindung ist ein Kontaktelement des ersten Gehäuses als hülsenförmiger Körper ausgebildet so daß der Gehäuseinnenraum des ersten Gehäuses durch das Kontaktelement und das ebenfalls hülsenförmig ausgebildete Gegenkontaktelement des zweiten Gehäuses mit dem Gehäuseinnenraum des zweiten Gehäuses verbunden ist.

In der zur Beatmung des Gehäuseinnenraumes des ersten Gehäuses vorgesehenen Öffnung des ersten Gehäuses kann ein Filter angeordnet werden, der zwar luftdurchlässig, aber weitgehend wasserundurchlässig ist.

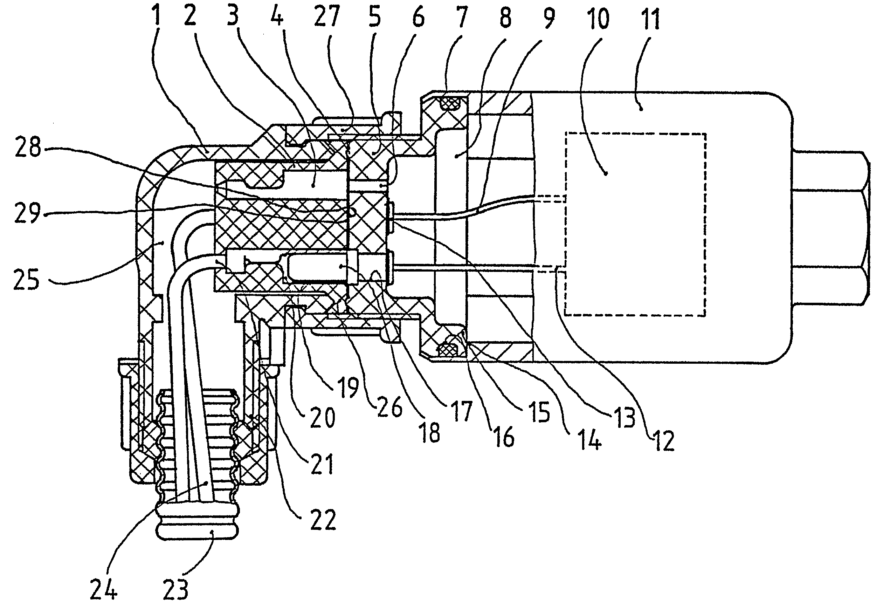

Anhand der Abbildung wird nachstehend ein Ausführungsbeispiel der Erfindung näher erläutert.

Die Abbildung zeigt eine aus zwei Gehäusen bestehende Gehäuseeinrichtung, wobei die beiden Gehäuse über eine Schraubverbindung miteinander verbunden sind und die je eine den Gehäuseinnenraum des ersten Gehäuses mit dem Gehäuseinnenraum des zweiten Gehäuses verbindende Beatmungsöffnung aufweisen.

In der Abbildung ist eine einen Drucksensor beinhaltende Gehäuseeinrichtung dargestellt, die sich aus einem ersten Gehäuse und einem zweiten Gehäuse zusammensetzt. Das erste Gehäuse besteht aus einem topfförmig ausgebildeten Gehäuseteil (11) und einem das Gehäuseteil (11) verschließenden Steckerteil (5). Im ersten Gehäuse (11, 5) ist neben den mechanischen Einrichtungen eines Drucksensors ein elektrisches Bauteil (10) enthalten, welches über elektrische Leitungen (9, 12) mit als Polstifte ausgebildeten elektrisch leitenden Kontaktelementen (13, 18) verbunden ist. Die Kontaktelemente (13, 18) sind auf der dem Gehäuseinnenraum (8) des ersten Gehäuses (11, 5) abgewandten Seite des Steckerteiles (5) angeordnet.

Das Steckerteil (5) besitzt auf seiner dem Gehäuseinnenraum (8) des Gehäuses (11, 5) zugewandten Seite einen flanschartigen umlaufenden Vorsprung (15) mit einer Umfangsnut (16) in der ein Dichtring (7) gelagert ist. Die Wand des Gehäuseteiles (11) weist auf ihrer dem Steckerteil (5) zugewandten Innenseite einen Absatz (14) auf, auf welchem das Steckerteil (5) mit seinem flanschartigen Vorsprung (15) aufliegt. Durch Umbördeln des freien Randbereiches des Gehäuseteiles (11) um den flanschartigen Vorsprung (15) herum ist das Steckerteil (5) mit dem Gehäuseteil (11) verbunden. Der in der Nut (16) des Vorsprunges (15) des Steckerteiles (5) gelegene Dichtring (7) liegt dichtend an der Wand des Gehäuseteiles (11) an.

Die Kontaktelemente (13, 18) sind mit ihrem dem Gehäuseinnenraum (8) des Gehäuses (11, 5) zugewandten Endbereich in Durchbrüchen (17) des Steckerteiles (5) gelagert und abgedichtet in diesen verankert. In diesem Ausführungsbeispiel ist lediglich die Lagerung des einen Kontaktelementes (18) in einem parallel zur Längsachse des Gehäuseteiles (11) verlaufenden Durchbruch (17) des Steckerteiles (5) dargestellt. In dem eine Stirnseite des Gehäuses (11, 5) bildenden Steckerteil (5) ist eine zur Beatmung des Gehäuseinnenraumes (8) des Gehäuses (11, 5) dienende Öffnung (6) angeordnet. Die Öffnung (6) für den Druckausgleich im ersten Gehäuse (11, 5) kann, wie im Ausführungsbeispiel dargestellt, von einem nicht mit einem Kontaktelement bestückten Durchbruch im Steckerteil gebildet werden, wenn es sich um ein mehrpoliges Steckerteil handelt, bei welchem ein Pol nicht benötigt wird.

Ein aus einem Gehäuseteil (1) und einem Träger (2) für elektrisch leitende Gegenkontaktelemente (19) bestehendes zweites Gehäuse (1, 2) mit einem domartigen Führungs- und Halteteil (27), dessen Innendurchmesser annähernd gleich ist dem Außendurchmesser des Steckerteiles (5) des ersten Gehäuses (11, 5) ist auf das Steckerteil (5) des ersten Gehäuses (11, 5) aufgeschraubt. Das Führungs- und Halteteil (27) ist zum Gehäuseteil (1) relativ verdrehbar.

Der Gehäuseinnenraum (25) des zweiten Gehäuses (1, 2) wird auf der dem ersten Gehäuse (11, 5) zugewandten Seite des zweiten Gehäuses (1, 2) von dem Träger (2) für die Gegenkontaktelemente (19) begrenzt. Die Gegenkontaktelemente (19) sind als Steckerbuchsen zur Aufnahme der als Polstifte ausgebildeten Kontaktelemente (13, 18) des ersten Gehäuses (11, 5) ausgebildet. Die Gegenkontaktelemente (19) sind mit als elektrisch leitende Verbindungselemente (21, 24) dienenden elektrischen Leitungen verbunden, welche wenigstens teilweise innerhalb des zweiten Gehäuses (1, 2) gelegen sind und durch einen hülsenförmigen Körper (23) aus dem zweiten Gehäuse (1, 2) herausgeführt sind. Der hülsenförmige Körper (23) besteht vorzugsweise aus einem elastischen Werkstoff und ist mit seinem einen Ende abgedichtet in oder an einer Öffnung des zweiten Gehäuses (1, 2) befestigt. Das andere Ende des hülsenförmigen Körpers (23) ist bei Verwendung des Drucksensors in einem Fahrzeug an einem gegen Nässe und Schmutz geschützten Ort, z. B. im Führerhaus des Fahrzeugs befestigt. Das zweite Gehäuse (1, 2) weist eine Öffnung (3) auf, die in den abgedichteten Raum zwischen den beiden Gehäusen (11, 5, 1, 2) mündet und über die der Innenraum (25) des zweiten Gehäuses (1, 2) mit diesem abgedichteten Raum verbunden ist.

Der Träger (2) für die Gegenkontaktelemente (19) weist auf seiner dem ersten Gehäuse (11, 5) zugewandten Seite eine Dichtfläche (29) auf. An der dem zweiten Gehäuse (1, 2) zugewandten Stirnfläche (28) des ersten Gehäuses (11, 5), die ebenfalls als Dichtfläche ausgebildet sein kann, ist eine ringförmige Erhöhung (4) angeordnet, die so ausgebildet ist, daß sie sich nach dem Herstellen der Steckverbindung zwischen den Kontaktelementen (13, 18) des ersten Gehäuses (11, 5) und den Gegenkontaktelementen (19) des zweiten Gehäuses (1, 2) an der Dichtfläche (29) des zweiten Gehäuses (1) andrückt und somit abdichtet. Die Gegenkontaktelemente (19) sind in Durchbrüchen (3, 20) des Trägers (2) des zweiten Gehäuses (1, 2) gelagert, welche sich von der den Gehäuseinnenraum (25) des zweiten Gehäuses (1, 2) begrenzenden Seite des Trägers (2) bis zur Dichtfläche (29) des Trägers (2) hin ersrecken.

Aus dem Durchbruch (3) des Trägers (2) des zweiten Gehäuses (1, 2), welcher nach dem Herstellen der Steckverbindung zwischen den Kontaktelementen (13, 18) mit den Gegenkontaktelementen (19), der Öffnung (6) des Steckerteiles (5) des ersten Gehäuses (11, 5), die kein Kontaktelement enthält, gegenüberliegt, ist das Gegenkontaktelement herausgenommen, so daß der Gehäuseinnenraum (8) des ersten Gehäuses (11, 5) und der Gehäuseinnenraum (25) des zweiten Gehäuses (1, 2) über die Öffnung (6) am ersten Gehäuse (11, 5) und den Durchbruch (3) am zweiten Gehäuse (1, 2) miteinander verbunden sind. Die Öffnung (3) im zweiten Gehäuse wird so auf einfache Art und Weise von einem nicht mit einem Gegenkontaktelement bestückten Durchbruch gebildet.

Die Öffnung (6) für den Druckausgleich im ersten Gehäuse (11, 5) der Gehäuseeinrichtung (11, 5, 1, 2) ist so innerhalb des abgedichteten Raumes (Dichtfläche 29) zwischen den beiden Gehäusen (11, 5, 1, 2) der Gehäuseeinrichtung (11, 5, 1, 2) gelegen.

Das Dichtelement, welches zur Abdichtung zwischen dem ersten Gehäuse (11, 5) und dem zweiten Gehäuse (1, 2) gelegen ist, braucht nicht, wie im Ausführungsbeispiel dargestellt, als Dichtfläche (29) ausgebildet zu sein, sondern kann z. B. aus einer ringförmigen Dichtung bestehen, die als radiale Dichtung zwischen der Innenwand des zweiten Gehäuses (1, 2) und der Mantelfläche des Steckerteiles (5) des ersten Gehäuses (11, 5) angeordnet ist. Der abgedichtete Raum zwischen dem ersten Gehäuse (11, 5) und dem zweiten Gehäuse (1, 2) kann ein Volumen von annähernd Null haben.

In die Öffnung (6) zur Beatmung des die elektrischen Bauteile beinhaltenden ersten Gehäuses (11, 5) kann ein Filterelement eingesetzt werden, welches bei Entfernen des zweiten Gehäuses (1, 2) vom ersten Gehäuse (11, 5) das Eindringen von Wasser und Schmutz in den Gehäuseinnneraum (8) des ersten Gehäuses (11, 5) verhindert, jedoch eine Beatmung des Gehäuseinnenraumes (8) ermöglicht. Das erste Gehäuse ünd das zweite Gehäuse können sowohl mit nur einem Kontaktelement bzw. Gegenkontaktelement als auch mit mehreren Kontaktelementen bzw. Gegenkontaktelementen ausgestattet sein.

Das erste Gehäuse und auch das zweite Gehäuse müssen selbstverständlich nicht mehrteilig ausgebildet sein. Jedes Gehäuse kann einstückig ausgebildet sein z. B indem es nach dem Einbringen der Bauteile mit einer Vergußmasse ausgefüllt wird, und zwar in den Bereichen, in denen kein kammerartiger Raum benötigt wird. Wesentlich ist jedoch, daß immer ein Durchlaß vorhanden ist, über welchen der abgedichtete Raum zwischen den beiden Gehäusen einerseits mit einem ein elektrisches Bauteil beinhaltenden Raum im ersten Gehäuse und andererseits mit einem Ausgang am zweiten Gehäuse verbunden ist.

**Patentansprüche**

1. Gehäuseeinrichtung mit Druckausgleich, insbesondere für einen Drucksensor, <u>mit folgenden Merkmalen</u>:

a) es ist ein erstes Gehäuse (11, 5) zur Aufnahme wenigstens eines elektrischen Bauteiles (10) vorgesehen;

b) das erste Gehäuse (11, 5) weist wenigstens ein elektrisch leitendes Kontaktelement (18) auf, welches mit dem elektrischen Bauteil (10) verbindbar ist;

c) es ist ein zweites Gehäuse (1, 2) vorgesehen, welches wenigstens ein elektrisch leitendes Gegenkontaktelement (19) aufweist, das mit wenigstens einem wenigstens teilweise innerhalb des zweiten Gehäuses (1, 2) gelegenen elektrisch leitenden Verbindungselement (24) verbunden ist;

d) das Kontaktelement (18) des ersten Gehäuses (11, 5) und das Gegenkontaktelement (19) des zweiten Gehäuses (1, 2) sind derart ausgebildet, daß sie nach Art einer Steckverbindung miteinander verbindbar sind;

e) es ist wenigstens ein Dichtelement (29) vorgesehen, welches derart angeordnet ist, daß nach dem Herstellen der Steckverbindung das Kontaktelement (18) und das Gegenkontaktelement (19) innerhalb eines vom Dichtelement (29) abgedichteten Raumes zwischen den beiden Gehäusen (11, 5, 1, 2) gelegen sind;

f) das erste Gehäuse (11, 5) weist eine Öffnung (6) für den Druckausgleich im ersten Gehäuse (11, 5) auf;

<u>gekennzeichnet durch die folgenden Merkmale:</u>

g) die Öffnung (6) des ersten Gehäuses (11, 5) für den Druckausgleich im ersten Gehäuse (11, 5) führt in den vom Dichtelement (29) abgedichteten Raum zwischen den beiden Gehäusen (11, 5, 1, 2);

h) das zweite Gehäuse (1, 2) weist eine Öffnung (3) auf, die in den abgedichteten Raum zwischen den beiden Gehäusen (11, 5, 1, 2) mündet und über die der Innenraum (25) des zweiten Gehäuses (1, 2) mit diesem abgedichteten Raum verbunden ist;

i) das zweite Gehäuse (1, 2) weist einen aus dem zweiten Gehäuse (1, 2) herausführenden Ausgang (23) auf, der mit dem Gehäuseinnenraum des zweiten Gehäuses (1, 2) verbunden ist.

2. Gehäuseeinrichtung mit mehreren Durchbrüchen in dem ersten Gehäuse für die Aufnahme von Kontaktelementen nach Anspruch 1, <u>dadurch gekennzeichnet,</u> daß die Öffnung (6) für den Druckausgleich im ersten Gehäuse (11, 5) von einem nicht mit einem Kontaktelement bestückten Durchbruch gebildet wird.

3. Gehäuseeinrichtung nach Anspruch 1, mit mehreren Durchbrüchen in dem zweiten Gehäuse für die Aufnahme von Gegenkontaktelementen, **dadurch gekennzeichnet,** daß die im zweiten Gehäuse (1, 2) angeordnete Öffnung (3) von einem nicht mit einem Gegenkontaktelement bestückten Durchbruch gebildet wird.

4. Gehäuseeinrichtung nach Anspruch 1, **dadurch gekennzeichnet,** daß der am zweiten Gehäuse (1, 2) angeordnete, aus dem zweiten Gehäuse (1, 2) herausführende Ausgang von einem hülsenförmigen Körper (23) gebildet wird, durch welchen das mit dem Gegenkontaktelement (19) verbundene elektrische Verbindungselement (21, 24) hindurchgeführt ist.

5. Gehäuseeinrichtung nach Anspruch 1, **da-durch gekennzeichnet,** daß die Öffnung (3) im zweiten Gehäuse (1, 2) von einem hülsenförmig ausgebildeten Gegenkontaktelement gebildet wird.

6. Gehäuseeinrichtung nach Anspruch 1, **da-durch gekennzeichnet,** daß die im ersten Gehäuse (11, 5) vorgesehene Öffnung für den Druckausgleich im ersten Gehäuse (11, 5) von einem hülsenförmig ausgebildeten, als Kontaktelement ausgebildeten Polstift gebildet wird.

7. Gehäuseeinrichtung nach wenigstens einem der vorhergehenden Ansprüche, **dadurch gekenn-zeichnet,** daß das Dichtelement zum Abdichten eines Raumes zwischen den beiden Gehäusen (11, 5, 1, 2) aus einer ringförmigen Dichtung besteht, die als radiale Dichtung zwischen der Innenwand des zweiten Gehäuses (1, 2) und der Mantelfläche des Steckerteiles (5) des ersten Gehäuses (11, 5) angeordnet ist.

## Claims

1. A pressure-relieving casing arrangement, in particular for a pressure sensor, having the following features:

a) a first casing (11, 5) for receiving at least one electrical component (10) is provided;

b) the first casing (11, 5) has at least one electrically conductive contact element (18) which is connectable to the electrical component (10);

c) a second casing (1, 2) is provided, which has at least one electrically conductive mating contact element (19) which is connected to at least one electrically conductive connecting element (24) positioned at least partially inside the second casing (1, 2);

d) the contact element (18) of the first casing (11, 5) and the mating contact element (19) of the second casing (1, 2) are constructed so that they can be joined to one another in the manner of a plug-and-socket connection;

e) at least one sealing element (29) is provided, which is arranged so that, when the plug-and-socket connection is made, the contact element (18) and the mating contact element (19) are positioned inside a space, sealed off by the sealing element (29), between the two casings (11, 5, 1, 2);

f) the first casing (11, 5) has an opening (10) for pressure relief in the first casing (11, 5);

characterized by the following features:

g) the opening (6) of the first casing (11, 5) for the pressure relief in the first casing (11, 5) leads into the space, sealed off by the sealing element (29), between the two casings (11, 5, 1, 2);

h) the second casing (1, 2) has an opening (3) which opens into the sealed space between the two casings (11, 5, 1, 2) and which connects the interior (25) of the second casing (1, 2) to this sealed space;

i) the second casing (1, 2) has an outlet (23) leading from the second casing (1, 2), which outlet (23) is connected to the interior of the second casing (1, 2).

2. A casing arrangement having several apertures in the first casing for receiving contact elements according to claim 1, characterized in that the opening (6) for the pressure relief in the first casing (11, 5) is formed by an aperture not fitted with a contact element.

3. A casing arrangement according to claim 1, having several apertures in the second casing for receiving mating contact elements, characterized in that the opening (3) arranged in the second casing (1, 2) is formed by an aperture not fitted with a mating contact element.

4. A casing arrangement according to claim 1, characterized in that the outlet arranged on the second casing (1, 2) and leading out of the second casing (1, 2) is formed by a tubular body (23) through which the electrical connecting element* (21, 24) connected to the mating contact element (19) is* guided.

5. A casing arrangement according to claim 1, characterized in that the opening (3) in the second casing (1, 2) is formed by a mating contact element of tubular construction.

6. A casing arrangement according to claim 1, characterized in that the opening provided in the first casing (11, 5) for the pressure relief in the first casing (11, 5) is formed by a pole pin constructed as a contact element of tubular construction.

7. A casing arrangement according to at least one of the preceding claims, characterized in that the sealing element for sealin off a space between the two casings (11, 5, 1, 2) consists of a ringshaped seal which is arranged in the form of a seal against radial flow between the inner wall of the second casing (1, 2) and the outer face of the plug part (5) of the first casing (11, 5).

\* Presumably in error for the plural - translator.

## Revendications

1. Boîtier avec compensation de la pression, notamment pour un capteur de pression, présentant les caractéristique suivantes:

a) il existe un premier corps (11, 5) recevant au moins un composant électrique (10);

b) le premier corps (11, 5) présente au moins un élément de contact (18) électriquement conducteur relié au composant électrique (10);

c) il existe un second corps (1, 2) possédant au moins un élément de contact associé (19) électriquement conducteur, relié à au moins un élément de liaison (24) électriquement conducteur placé au moins en partie à l'intérieur du second corps (1, 2);

d) l'élément de contact (18) du premier corps (11, 5) et l'élément de contact associé (19) du second corps (1, 2) sont conformés de telle manière qu'ils puissent être reliés à la manière d'une connexion enfichable;

e) il existe au moins un élément d'étanchéité (29) disposé de telle manière que, après établissement de la connexion enfichable, l'élément de contact (18) et l'élément de contact associé (19) sont situés à l'intérieur d'un logement étanche fermé par l'élément d'étanchéité (29) entre les deux corps (11, 5, 1, 2);

f) le premier coprs (11, 5) présente une ouverture (6) pour la compensation de la pression dans le premier corps (11, 5);

g) caractérise en ce que l'ouverture (6) du premier corps (11, 5) destinée à la compensation de la pression dans le premier corps (11, 5) conduit dans le logement étanche fermé par l'élément d'étanchéité (29) entre les deux corps (11, 5, 1, 2);

h) en ce que le second corps (1, 2) présente une ouverture (3) qui débouche dans le logement étanche entre les deux corps (11, 5, 1, 2) et relie l'intérieur (25) du second corps (1, 2) avec ce logement étanche;

i) en ce que le second corps (1, 2) présente une sortie (23) reliée avec l'intérieur du second corps (1, 2).

2. Boîtier avec plusieurs traversées dans le premier corps destinées à recevoir des éléments contact selon la revendication 1, caractérisé en ce que l'ouverture (6) de compensationde la pression dans le premier corps (11, 5) est formée par une traversée qui n'est pas équipée d'un élément de contact.

3. Boîtier selon la revendication 1, avec plusieurs traversées dans le second corps destinées à recevoir des éléments de contact associés, caractérisé en ce que l'ouverture (3) ménagée dans le second corps (1, 2) est formée par une traversée qui n'est pas équipée d'un élément de contact associé.

4. Boîtier selon la revendiaction 1, caractérisé en ce que la sortie ménagée sur le second corps (1, 2) est formée d'un élément en forme de douille (23) par lequel sort l'élément de liaison (21, 24) électriquement conducteur relié à l'élément de contact associé (19).

5. Boîtier selon la revendication 1, caractérisé en ce que l'ouverture (3) dans le second corps (1, 2) est formée par un élément de contact associé ayant la forme d'une douille.

6. Boîtier selon revendication 1, caractérisé en ce que l'ouverture mébagée dans le premier corps (11, 5) pour la compensation de la pression de celui-ci est formée par une broche polaire en forme de douillet et jouant le rôle d'élément de contact.

7. Boîtier selon au moins une des revendications précédentes, caractérisé en ce que l'élément d'étanchéité fermant un logement entre les deux corps (11, 5, 1, 2) est constitué d'un joint de forme annulaire qui est disposé comme joint radiale entre la paroi interne du second du corps (1, 2) et la génératrice du connecteur (5) du premier corps (11, 5).